# EUROPÄISCHE PATENTANMELDUNG

(11) **EP 3 482 663 A1**
(43) Veröffentlichungstag der Anmeldung: **15.05.2019**
(21) Anmeldenummer: 18000120.8
(22) Anmeldetag: 09.02.2018
(51) Int. Cl.: A47J 36/34, A47J 36/36, A47J 27/12

(54) **ABSTANDSSHALTER ZWISCHEN KOCHTOPFBODEN UND KOCHFELD FÜR INDUKTIONSKOCHFELDER**

(30) Priorität: 09.11.2017 DE 202017005821 U
(71) Anmelder: Tönsing, Erhard, 49201 Dissen a. T. W. (DE)
(72) Erfinder: Tönsing, Erhard, 49201 Dissen a. T. W. (DE)
(74) Vertreter: Wachtarczyk, Birk

(57) **Zusammenfassung**

**1.** Abstandshalter (3) zwischen Kochtopfboden (1) und Kochfeld für Induktionskochfelder.
**2.1.** Bei bekannten Kochtöpfen besteht ein direkter Kontakt zwischen Kochtopfboden und Kochfeld. Die verursachte hohe Wärmeübertragung bedingt, dass Kochfeld und Kochtopf während des Kochens sowie anschließend stark erhitzt sind. Der neue Abstandshalter zwischen Kochtopfboden und Kochtopf soll einen direkten Kontakt zwischen Kochfeld und Kochtopfboden vermeiden. Infolgedessen wird die Erwärmung des Kochfeldes und der Abstandshalter erheblich reduziert, während gleichzeitig das Gargut im Topf unverändert erhitzt wird. Der erhitzte Topf mit Abstandshaltern kann auf jedes beliebige Flächenmaterial abgestellt werden, ohne diese Fläche zu beschädigen.
**2.2.** Am Kochtopfboden (1) werden an verschiedenen Stellen in Material, Stärke und Form variable Abstandshalter (3) angebracht, wodurch die Kontaktfläche des Kochtopfes zum Kochfeld auf 4-5 % sinkt. Infolgedessen minimiert sich die Temperatur des Kochfeldes während des Kochvorgangs. Die Abstandshalter (3) können fest montiert, in den Topf geprägt, abnehmbar oder unterlegbar sein.
**2.3.** Der Abstandshalter eignet sich durch beliebige Variation hinsichtlich Materials und Stärke für die Verwendung jedes beliebigen Kochtopfes auf jedem Induktionskochfeld.
**3.**

## Beschreibung

Es ist bekannt, Kochtöpfe in der Bauweise aus einem Kochtopf in fester Verbindung mit einer Topfmantelfläche herzustellen, wodurch die gesamte Fläche des Kochtopfbodens ebenmäßig flach auf dem Kochfeld aufliegt.

Der im Patentanspruch angegebenen Erfindung liegt das Problem zugrunde, dass durch die direkte Kontaktfläche des Kochtopfes mit dem Induktionskochfeld eine starke Wärmeübertragung zwischen Kochtopf und Kochfeld entsteht. Dies sorgt dafür, dass das Kochfeld während des Koches und auch im Anschluss extrem heiß ist.

Dieses Problem wird durch die im Patentanspruch aufgeführten Abstandshalter sowie Prägungen gelöst.

Die mit der Erfindung erzielten Vorteile bestehen insbesondere darin, dass statt des direkten Kontaktes des gesamten Kochtopfbodens mit dem Kochfeld, die Kontaktfläche zwischen Kochfeld und Topf minimiert wird. Dadurch die Vermeidung des direkten Kontakts zwischen Kochtopfboden und Kochfeld, wird eine deutliche Temperaturabnahme auf dem Kochfeld, sowohl während des Kochens, als auch im Anschluss, erzielt, während gleichzeitig das Gargut im Topf unverändert erhitzt wird.

Eine vorteilhafte Ausgestaltung der Erfindung ist im Patentanspruch 4. angegeben. Die Weiterbildung nach Patentanspruch 4. ermöglicht es, bei jedem handelsüblichen Kochtopf den notwendigen Abstand herzustellen, um die Erhitzung des Kochfeldes bei gleichzeitiger unveränderter Erwärmung des Gargutes im Topf zu erreichen.
Sinnentsprechend können die Abstandshalter nach Bedarf auch entfernt und der Kochtopf sodann auch auf Glaskermaik-, Gas- und Gusseisen-Kochfeldern genutzt werden.
Zudem schafft die Erfindung nach Patentanspruch 4. den weiteren simultanen Vorteil, dass sie an jedes individuelle Induktionsfeld und insoweit an die individuelle Effizienz der darin verbauten Magnetspule angepasst werden kann, indem die Dicke der Abstandhalter variabel ausgestaltet wird.
Weitere mit der Erfindung erzielte Vorteile bestehen, insbesondere dadurch, dass die Abstandshalter auch aus Materialien mit geringer Wärmeleitfähigkeit, wie Holz und polymeren Werkstoffen, bestehen können, darin, dass der erhitzte Topf während oder nach dem Kochvorgang unmittelbar auf hitzeempfindliche Oberflächen abgestellt werden kann.

Dadurch werden Risiken wie thermisch bedingten Spannungsrisse, Brandflecken, Farbflecken oder Auflösungserscheinungen bei Kunststoffarbeitsflächen vermieden, welche bestehen würden, wenn man statt der Erfindung einen erhitzten, handelsüblichen Topf auf einer hitzeempfindlichen Oberfläche abstellt.

Ausführungsbeispiele der Erfindung sind in den Zeichnungen dargestellt und werden im Folgenden näher beschrieben.

### Es zeigen

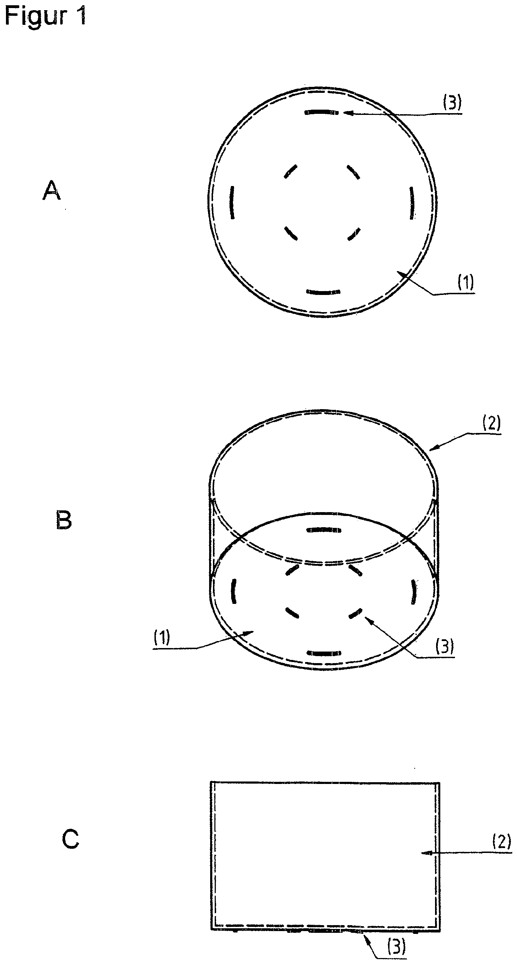

Figur 1 einen Abstandhalter am Kochtopfboden in Form von Kreisradien aus einer senkrechten, diagonalen sowie waagerechten Ansicht.

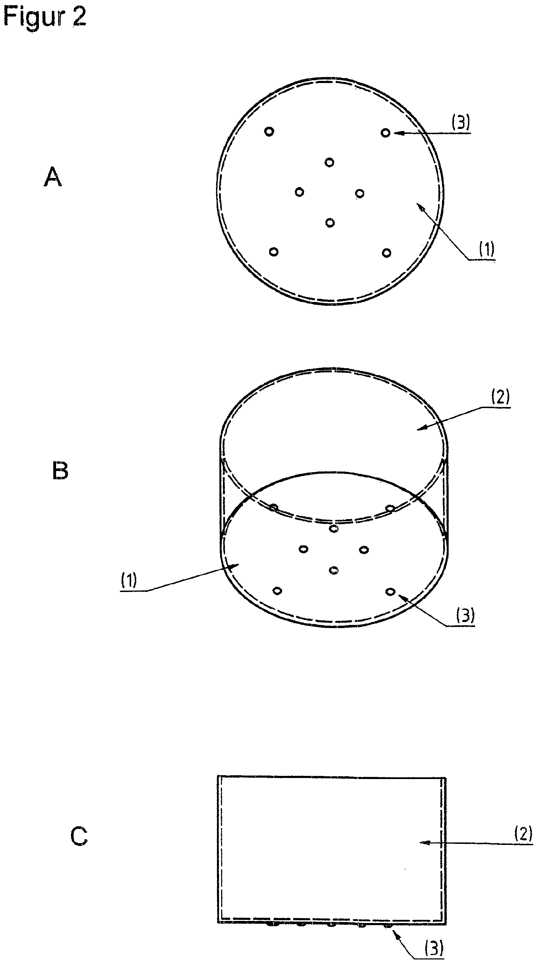

Figur 2 einen Abstandhalter am Kochtopfboden in Form von Punkten aus einer senkrechten, diagonalen und waagerechten Ansicht.

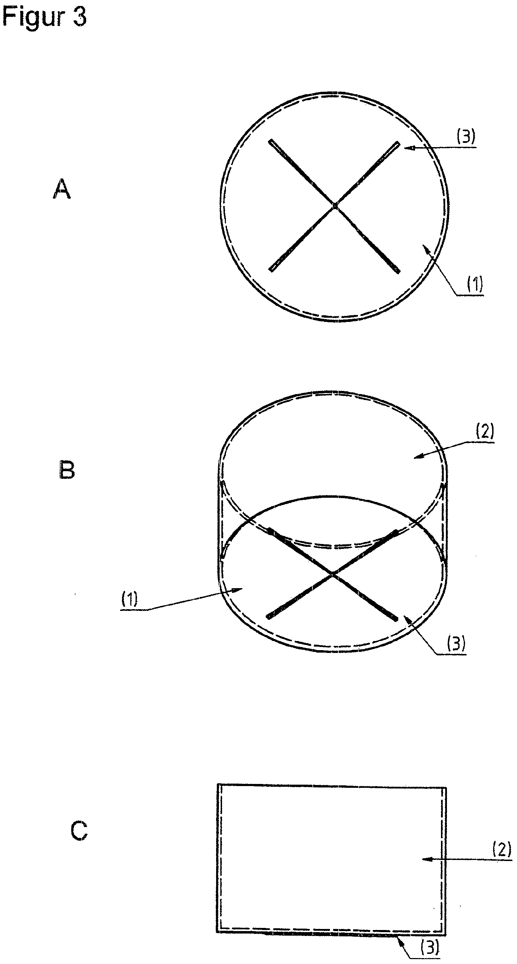

Figur 3 einen Abstandhalter am Kochtopfboden in Form eines Sterns aus einer senkrechten, diagonalen und waagerechten Ansicht.

In den Figuren ist der Kochtopfboden (1.) zu sehen, welcher untrennbar mit der Mantelfläche des Kochtopfes (2.) verbunden ist. Auf dem Kochtopfboden (1.) sind die verschiedenen Formen der Abstandshalter (3.) aufgebracht, wodurch die Minimierung der Kontaktfläche zwischen Kochtopfboden und Kochfeld erreicht wird.

### Bezugszeichenliste

(1) Topfboden
(2) Mantelfläche des Topfes
(3) Distanzstücke am Topfboden

## Patentansprüche

1. Abstandshalter zwischen Kochtopfboden und Kochfeld für Induktionskochfelder,
**dadurch gekennzeichnet,**
**dass** am Kochtopfboden (1.) an verschieden Stellen Abstandshalter (3.) angebracht sind, welche den direkten Kontakt des gesamten Kochtopfbodens zum Kochfeld verhindern.

2. Kochtopf nach Patenanspruch 1.,
**dadurch gekennzeichnet, dass** am Kochtopfboden (1.) an verschiedenen Stellen Abstandshalter (3.) aus Holz, Edelmetallen oder polymeren Werkstoffen montiert sind.

3. Kochtopf nach Patenanspruch 1.,
**dadurch gekennzeichnet, dass** im Kochtopfboden (1.) Prägungen vorgesehen sind, welche den Abstand zwischen Kochfeld und Kochtopf herstellen.

4. Kochtopf nach Patenanspruch 1.,
**dadurch gekennzeichnet, dass** zwischen Kochtopf und Kochfeld ein Abstandshalter aus Holz, Edelmetallen oder polymeren Werkstoffen zwischengelegt wird, welcher nicht fest mit dem Kochtopf verbunden ist.
